# EUROPEAN PATENT APPLICATION

(11) **EP 2 623 364 A2**
(43) Date of publication of application: **07.08.2013**
(21) Application number: 13152428.2
(22) Date of filing: 23.01.2013
(51) Int. Cl.: B60L 11/18

(54) **Electric vehicle charge point management system**

(30) Priority: 31.01.2012 CA 2766429
(71) Applicant: Diffraction Limited, Ottawa, Ontario K2G 0G3 (CA)
(72) Inventor: George, Douglas B., Ottawa, Ontario K2G 0G3 (CA)
(74) Representative: Pfenning, Meinig & Partner GbR

(57) **Abstract**

An electric vehicle charge station incorporating an image sensor, which provides users with status information such as whether the charge point is available, in use, damaged, or blocked by another vehicle. The image sensor may also be used for to monitor the security of the vehicle during charging, detecting tampering with the vehicle or the charge cable.

## Description

### Field of the Invention

This invention relates to systems and methods for management of electric vehicle charging.

### Background of the Invention

Electric vehicles are becoming an important component of the public transportation systems. Like vehicles powered by liquid fuels, these vehicles need to be periodically resupplied with energy. Although most vehicles are primarily charged at home or a business location, they need additional public or private charge stations to extend their range.

Early users of these charge stations have often been frustrated by lack of availability. Since the range of many electric vehicles is limited, traveling to a remote charge station only to find it unavailable can be a serious problem if there is insufficient range available to travel to another charge station. Even if the charge station is fully functional and available, it can be blocked by another vehicle, e.g. a gas powered vehicle improperly parked in the charging station's slot.

Another problem concerns the security of the vehicle during charging. Users have experienced third parties interfering with the charge process, for example by unplugging the vehicle. This can be a particular problem where regulations ban cars parking in the slots if they are not charging - an act of vandalism can result in the owner's car being ticketed or towed. In other cases the vehicles or the charge stations themselves have been vandalized.

Some existing charge stations are parts of networks, whereby the station can be remotely monitored and controlled. Frequently the users can access maps or databases to identify nearby charge points, and in some cases determine whether the stations are available for use; however, this often does not reflect situations external to the charge point that may interfere with their ability to use the station.

### Summary of the Invention

According to one aspect of the present invention, there is provided an electric vehicle charge station incorporating electric vehicle service equipment for connecting the vehicle to an electrical power source; one or more optical image sensors; a control processor; and a communications link for remote access and control.

In the above embodiment, a preferred aspect is where the electric vehicle charge station includes a communications link which periodically transfers image data to a remote server.

In the above-described embodiment, a further preferred aspect is where the electric vehicle charge station includes a communications link which transfers image data to a remote server when motion is detected.

In a further preferred aspect of the above embodiment, the electric vehicle charge station includes a communications link which transfers image data to a remote server whenever the vehicle charging state changes.

In yet a further preferred aspect of the above embodiment, the electric vehicle charge station includes a remote server which is remotely accessible by users.

In another preferred aspect of the above embodiment, the electric vehicle charge station includes a remote access which is via an internet server.

According to yet another preferred embodiment of the present invention, the electric vehicle charge station includes the capability wherein the vehicle owner can remotely control and monitor the charging state of the vehicle, and wherein other potential users can remotely monitor the state of the charge station.

In a further preferred embodiment of the present invention, the electric vehicle charge station includes the capability of permitting the server to send notifications and images to the vehicle owner when motion is detected.

In yet another preferred aspect of the above embodiment, the electric vehicle charge station includes the capability of permitting the server to send notifications and images upon request by the vehicle owner.

According to a preferred aspect of the above embodiment, the communications link of the electric vehicle charge station is a cellular communications network.

In another preferred aspect of the above embodiment, the communications link of the electric vehicle charge station is a hard wired internet connection.

In yet another preferred aspect of the above embodiment, the communications link of the electric vehicle charge station is a hard wired telephone connection.

In another preferred aspect of the above embodiment, the communications link of the electric vehicle charge station is a WiFi communications network.

In addition to the above described embodiments, the invention also provides a method of management of electrical vehicle charging; this method according to this invention is carried out by utilizing the above-described systems and accordingly the method also forms part of the present invention.

In a preferred embodiment, one or more digital video cameras with suitable wide-angle lenses are mounted on the charge station or adjacent to it. Ideally the camera(s) will be able to view the parking spots near the station, the charge port on the vehicle, and the charging cable.

Using a communications link, such as a cellular data link, information is transferred to a remote server. This information would include the status from the electric vehicle charger itself, as well as video information from the camera(s). To reduce bandwidth consumption camera images would be transmitted periodically, upon request by a user viewing the data, when motion is detected, and whenever charging state changes.

In a preferred embodiment, status of the charger and image data would be presented to the user via web browser, smartphone application, or built-in vehicle display. Using this web interface, the user could request information for chargers near the current location, or another location selected from a map.

In an alternate configuration of the system of the present invention, it is contemplated that a separate web cam with its own direct connection to a server may also be employed.

The system may thus have the further feature wherein the optical image sensors of the electric vehicle charge station of the above embodiments have independent communications links.

In a further preferred embodiment of the above system, there is provided a method of management of an electrical vehicle charging system comprising carrying out said method of management by utilizing the system of any one of the above embodiments.

### Brief Description of the Drawings

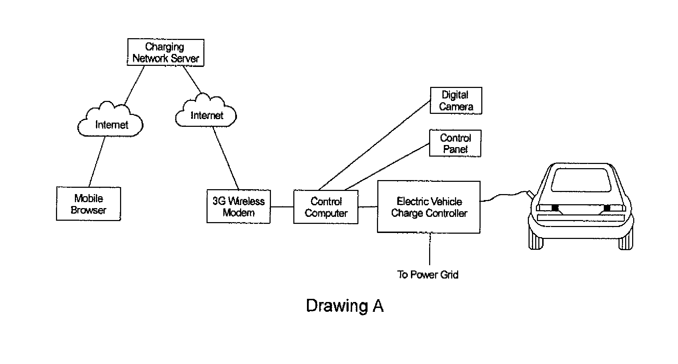

Having thus generally described the invention, reference will now be made to the accompanying drawing, labeled Drawing A, illustrating preferred embodiments of the invention.

In greater detail, Drawing A shows an electric vehicle connected to a charge controller, which provides the handshaking protocol and power switching required by international standards. The charge controller is controlled and monitored by an embedded computer, which also connects to one or more Digital Cameras and a Control Panel.

The control computer is connected to the Charging Network Server via the internet, typically through a 3G or similar digital modem. The same network is used by mobile browsers and other devices to access information and remotely control vehicle charging.

### Detailed Description of the Preferred Embodiment

The charge station is connected to an electric vehicle using a standard connecting cable such as J1772. The Control Panel allows the user to start/stop charging, and also to access any billing system that may be required by the charge network provider. For pay networks a charge card, RFID, or other identification system may be used. The charge station will communicate with the remote Charging Network Server for billing authorization.

The charge station will periodically capture an image of any vehicle, persons, or other objects in its vicinity. These images will be relayed to the Charging Network Server. Additional images will be captured whenever charge status is changed, including plugging/unplugging vehicles, or when motion is detected in the vicinity of the charger. Image capture may also be initiated by a command from the Charging Network Server. The messages will also include charger status.

When a user determines that charging is required, they will access a database in the Charging Network Server through the internet and a mobile web browser or "app", either on a smartphone or built into the vehicle. A map display will allow the user to identify charging locations near their current location or near a planned destination. The user can then access the status information on the charger, and view recent images to verify that the charger is available, and not damaged or blocked by an unauthorized vehicle. At the option of the charging provider, various services may be provided, such as charger reservations and billing.

During charging, the owner of the vehicle may request updated pictures and charger status. In addition, the owner may request notifications be sent under certain conditions; for example, whenever the charger status changes or whenever motion is detected by the camera. This will allow the user to verify that the charge is progressing normally, be alerted when charging is completed, and also ensure that the vehicle is not being inappropriately unplugged or vandalized. The Charging Network Server will also archive captured images for security reasons, including identifying persons tampering with vehicles or equipment.

It will be understood that various modifications can be made to the above-described embodiments, without departing from the spirit and scope of the invention.

## Claims

1. An electric vehicle charge station incorporating electric vehicle service equipment for connecting the vehicle to an electrical power source; one or more optical image sensors; a control processor; and a communications link for remote access and control.

2. The electric vehicle charge station of claim 1, wherein said communications link periodically transfers image data to a remote server.

3. The electric vehicle charge station of claim 1 or 2, wherein said communications link transfers image data to a remote server when motion is detected.

4. The electric vehicle charge station of claim 1, 2 or 3, wherein said communications link transfers image data to a remote server whenever the vehicle charging state changes.

5. The electric vehicle charge station of claim 2, 3 or 4, wherein the remote server is remotely accessible by users.

6. The electric vehicle charge station of claim 5, wherein said remote access is via an Internet server.

7. The electric vehicle charge station of any one of claims 1 to 6, wherein the vehicle owner can remotely control and monitor the charging state of the vehicle.

8. The electric vehicle charge station of claim 5, wherein other potential users can remotely monitor the state of the charge station.

9. The electric vehicle charge station of claim 4, 5 or 6, wherein the server can send notifications and images to the vehicle owner when motion is detected.

10. The electric vehicle charge station of claim 4, 5 or 6, wherein the server can send notifications and images upon request by the vehicle owner.

11. The electric vehicle charge station of claim 1, 2 or 3, wherein said communications link is a cellular communications network.

12. The electric vehicle charge station of claim 1, 2 or 3, wherein said communications link is a hard wired internet connection.

13. The electric vehicle charge station of claim 1, 2 or 3, wherein said communications link is a hard wired telephone connection and/or a WiFi communications network.

14. The electric vehicle charge station of any one of claims 1 to 13, wherein said optical image sensors have independent communications links.

15. A method of management of an electrical vehicle charging system comprising carrying out said method of management by utilizing the system of any one of claims 1 to 14.
